(19)

Europäisches
Patentamt

European
Patent Office

Office européen
des brevets

(11) **EP 2 767 180 B1**

(12) **EUROPEAN PATENT SPECIFICATION**

(45) Date of publication and mention
of the grant of the patent:
**04.01.2017 Bulletin 2017/01**

(51) Int Cl.:
**A41D 31/00** *(2006.01)*    **D03D 15/12** *(2006.01)*
**D03D 1/00** *(2006.01)*    **D03D 13/00** *(2006.01)*

(21) Application number: **13155646.6**

(22) Date of filing: **18.02.2013**

(54) **Flame protective fabric structure**

Flammschützende Gewebestruktur

Structure de tissu ignifuge

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.08.2014 Bulletin 2014/34**

(73) Proprietor: **W.L. Gore & Associates GmbH
85640 Putzbrunn (DE)**

(72) Inventors:
• **John, Rüdiger
83052 Bruckmühl (DE)**

• **Knörrer, Heiko
95326 Kulmbach (DE)**
• **Schneider, Reiner
95197 Schauenstein (DE)**
• **Zischka, Bernd
83104 Tuntenhausen (DE)**

(74) Representative: **Klunker . Schmitt-Nilson . Hirsch
Patentanwälte
Destouchesstraße 68
80796 München (DE)**

(56) References cited:
**WO-A1-2011/057073     WO-A2-2009/012266
US-A1- 2005 025 962     US-A1- 2012 270 456**

EP 2 767 180 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The invention relates to a flame protective fabric structure comprising a fabric being formed with yarns, the yarns made of a fiber blend of at least a first fiber component and a second fiber component, the first fiber component comprising flame resistant viscose fibers and the second fiber component comprising meltable fibers. The invention also relates to a clothing article comprising such flame protective fabric structure.

Fabrics, particularly for clothing, with flame protective properties are desired. They are typically used in so-called Personal Protective Equipment (PPE) for protection in working environment like for firefighting. It is often essential that work clothing fulfill a protective function, such as flame resistance, in order to protect the wearer of the work clothing from dangerous environmental conditions, such as fire and heat. Disadvantageously, material structures for heat- and flame-resistant clothing produced from specific fibers or yarns, such as aramide, which are particularly suited for fire-protective clothing, often provide reduced wearing comfort and often can only be dyed with considerable difficulty or not at all with common dying methods. In addition there is a strong need for environmental preferable fibers, e.g. with preferable LCA (life cycle analysis).

Up to now, the only fabrics with full flame retardant (FR) protection (Index III according to ISO 15015) used in PPE are (a) blends of inert FR fiber blends, e.g. aramides, Polybenzimidazol (PBI), Modacryl and FR Viscose, examples: Nomex III, Defender M (Lenzing (viscose FR) 65 %, para aramide 25 %, Nylon 10 %), aramide/viscose blends, and (b) post FR treated cellulosic fiber blends with low percentage of meltable fibers, examples: Westex INDURA (R) Ultra Soft (R).

In WO 2009/012266 there is disclosed a thermal protective knit fabric. It has been discovered therein that a knit fabric exhibiting effective thermal protective characteristics, including the absence of melting or dripping, may be achieved when the fabric is comprised of an intimate blend of cellulosic and nylon staple fibers. Such a fabric may be used to particular advantage to offer protection against severe thermal events to the wearer of a garment made from that fabric. The fabric may comprise blended cellulosic and nylon staple yarn characterized by a weight ratio of cellulosic to nylon within said yarn ranging from about 55:45 to about 85:15. One embodiment of the fabric may contain yarn having a ratio of cellulose to nylon within the yarn of from about 60:40 to about 70:30. Certain yarns made from intimate blends of nylon and cellulosic staple fibers can be knit to provide fabrics particularly suitable for the manufacture of garments. Cellulosic fibers are derived from linear long-chain polymer polysaccharide consisting of linked, beta glucose units. Cellulosic fibers include naturally occurring fibers, such as cotton, flax, hemp, jute, ramie and synthetically manufactured fibers, such as rayon (regenerated cellulose), FR (fire resistant) rayon, acetate (cellulose acetate), triacetate (cellulose triacetate), etc. In certain yarn and fabric embodiments, the weight percentage of the cellulosic fiber exceeds the weight percentage of nylon fiber.

Fabric structures with full flame retardant (FR) protection (Index III according to ISO 15015) used in PPE are known. Typically, such fabric structures are made of fiber or fiber blends comprising aramides, PBI, or modacrylics which are difficult to dye and expensive. Especially the dying of such fibers/fiber blends involves a more complex process to ensure that all fiber components are covered with dyestuff and that the dyestuff is durably and permanently bonded to the fibers.

US 2012/0270456 A1 discloses a flame retardant fabric for use in personal protective clothing which provides a high level of protection from flames or other sources of heat characterized in that it is made from a mixture of a primary yarn which is a blend of FR cellulosic fibers with high temperature resistant polymer fibers and a secondary yarn which is a twisted yarn containing a continuous synthetic filament yarn. Particularly, the high temperature resistant polymer fibers are chosen from para-aramide, meta-aramide, PBI and blends of these fibers which are difficult to dye and expensive. The fabric is constructed so that the secondary yarn occurs in the warp and the weft at a predetermined frequency, resulting in a rough mesh structure formed by the secondary yarn.

Besides the requirement of protection there are as well requirements for optical aspects as uniform colors, disruptive patterns, corporate colors and easy to care requirements, particularly regarding the fabric. Today, the flexibility in dying of available fabric solutions is a big concern. The currently existing solutions have the following disadvantages: For a broad flexibility in dye ability and color performance (particularly safe and solid dye process), up to now the typical compromise was to use Modacryl as "easy to dye" fiber in the blend, but Modacryl cannot stand high thermal exposures and has low mechanical properties. Alternatively, in prior available FR viscose blends Aramide fibers have been used for mechanically and flame resistancy reasons. As there is no thermoplastic fiber involved, the blend cannot be heatsetted and therefore shows disadvantages in the care process, and the dimensional stability is limited. For dyeing of Aramide blends, a carrier is unavoidable.

US 2005/0025962 A1 discloses an intimate blend of staple fibers which has from 10 to 75 parts by weight of at least one aramid staple fiber, from 15 to 80 parts by weight of at least one flame retardant cellulosic staple fiber, and from 5 to 30 parts by weight of at least one polyamide staple fiber. The intimate blend of staple fibers provides yarns and fabrics that are flame retardant, also referred to as fire resistant, and can be used to make flame retardant articles, such as clothing. The flame retardant fabrics may have a basis weight from 4 to 15 ounces per square yard.

Another way of designing easy to dye fabrics is double face technology, whereby an easy to dye fiber component is mainly on the surface of the fabric and the reinforcement and FR components are in a second layer, e.g. "full option" Kennel blend. Such disadvantages are overcome according to the concept of the present invention, as set out in more detail below.

One object of the invention is to provide a flame protective fabric structure with improved protection properties such to achieve an improved non-melt performance and preferably good dye ability and color quality.

The present invention provides a flame protective fabric structure according to claim 1 and a clothing article comprising such flame protective fabric structure according to claim 16. The dependent claims refer to embodiments of said fabric structure and clothing article.

In a first aspect, there is provided a flame protective fabric structure comprising a fabric being formed with multiple yarns, wherein each of the yarns is made of a fiber blend of at least a first fiber component and a second fiber component, the first fiber component comprising flame resistant (FR) viscose fibers in an amount of at least 50% of the fiber blend weight and the second fiber component comprising meltable fibers in an amount of at least 10% of the fiber blend weight. The fabric is formed as a woven fabric with a total fractional cover factor of greater than 60% having a capability to withstand a horizontal flame exposure of 10 seconds without hole formation according to ISO 15025/14116_Index III.

The invention provides the advantage that a woven fabric structure based on a fiber blend of FR viscose fibers and meltable fibers can withstand high temperatures, thus providing flame protection. The melting component, particularly the melting polymer component reinforces the fiber structure of the viscose fibers, thus strengthening the fabric structure itself until the flame and heat exposure stops. The woven fabric structure with a total fractional cover factor of greater than 60% ensures the required tightness and density of the fabric structure to hinder a break open in the flame exposure. Therefore, it provides, as a result of the particular combination of its constitutional and constructional features, a capability to withstand a horizontal flame exposure of 10 seconds without hole formation according to ISO 15025/14116-Index III.

According to existing art, fabrics are typically assessed with respect to flame retardancy according to their specific weight, i.e. flame retardancy is typically assessed to be higher with fabrics having a higher specific weight compared to light weight fabrics. On the other hand, with this invention it has been found that the cover factor, particularly the total fractional cover factor, is an appropriate means for achieving and improving flame resistance. Increasing the cover factor, however, may also increase material and manufacturing costs. A cover factor in that amount has been found to be advantageous for fulfilling the requirements of ISO 15025, since it has been found that such closely woven structure ensures that flames cannot break through.

A woven fabric refers to a fabric formed by weaving. Weaving is a process of fabric forming by the interlacement of warp and weft yarns. Both warp and weft yarns run essentially straight and parallel to each other, either lengthwise (warp) or crosswise (weft). Woven fabric only stretches diagonally on the bias directions (between the warp and weft directions), unless the threads are elastic.

According to an embodiment the total fractional cover factor is ≥ 60%, preferably greater than 65%. It has been found that such cover factor results in obtaining a reproduceable flame resistancy over a high number of fabrics.

With providing a fiber blend having a defined ratio of FR viscose fibers and meltable fibers in each of the yarns, an effective mixture can be achieved to prevent the typical fusion/melting behaviour of the meltable fibers, such as polyamide. The fabric with such blend of fiber components in the yarns does not show the typical melting behaviour, since the molten component of the yarn is taken up by the viscose fibers of the yarn, and does not show dripping and a sticky behaviour after cooling. In particular, the FR viscose fiber component of the fiber blend is able in case of heat exposure to hold/store the molten fiber component within its fiber structure. The flame protection by the FR component in the FR viscose fiber is sufficient to stop the afterflame and afterglow. Particularly, the FR viscose fibers and the meltable fibers are homogeneously distributed within the blend of the yarns of the fabric.

Using an amount of at least 10 % meltable fibers like polyamide has the advantage of providing sufficient reinforcement of the viscose fibers, good dyeability and color quality. Especially when the meltable fibers melt upon flame exposure, they contribute to stabilizing the viscose fibers so that these may maintain their flame protection properties upon flame exposure over a longer time.

Using an amount of at least 50% FR viscose fibers has the advantage of providing sufficient amount to take up the molten component, a good flame protection and the use of the moisture management capabilities of viscose fibers.

Particularly, textile structures based on FR viscose can withstand high temperatures until the meltable fibers, such as PA polymer, start decomposition, wherein the melting polymer is used to reinforce the grid structure of the FR viscose fibers and strengthening the package until the flame and heat exposure stops.

Therefore, a thermally stable, dyeable flame protective fabric structure for Personal Protective Equipment use can be provided.

The meltable fiber component or fibers can be provided with flame retardant additives for increasing the flame resistance. However, it is not required to add flame retardant additives into the meltable fiber component, but it is possible to do so.

Meltable fibers are fiber materials that are meltable when tested according to the Melting and Thermal Stability test. According to an embodiment, in accordance with the Melting and Thermal Stability Test such meltable fibers have a melting temperature of less than 268°C.

According to an embodiment of the invention, the meltable fibers are made of polyamide (optionally including inert FR additive), preferably of polyamide 6.6. Alternatively PP (polypropylen), and/or PE (polyethylen) may be used. Polyamide 6.6 has a melting temperature in the range of 255 - 260 °C, polyamide 6 has a melting temperature in the range of 215 - 220°C, polypropylen has a melting temperature in the range of 160 - 175 °C and polyethylen has a melting temperature in the range of 105 - 135 °C .

Polyamide fibers are popular in fabrics applications because they are easy to dye, have a high abrashion resistance, are easy to manufacture and cheap in comparison to other fibers. Typically, polyamide fibers are not used in flame protective applications as the LOI of polyamide is with 22 too low for flame retardent performance on its own and the fibers show melting, dripping; afterglow; afterburn and hole formation in flame tests. There is a broad range of other known additional or continuative textile manufacturing processes which are easy to adopt (e.g. sanfor, brushing, calendring, etc.).

According to the invention, after a direct horizontal flame exposure for 10 seconds according to ISO 15025/14116_Index III, an afterburn, melting and hole formation of the fabric structure according to the invention can be prevented.

In one embodiment the inventive fabric structure comprises at least on barrier layer adjacent to one side of the fabric. It was found that a combination of the fabric structure and at least one barrier layer can deliver a multilayer arrangement which protects against open flame according to ISO 15025 A for 10 seconds (Full FR Protection).

According to an embodiment of the invention, the fiber blend comprises the flame resistant viscose fibers and the meltable fibers in a weight ratio of 80:20.

According to an embodiment, the above advantages are particularly well observable with a fabric having blended fibers containing 80% viscose FR fibers and 20% polyamide fibers. The fabric is formed as a woven fabric or textile with a total fractional cover factor of greater than 60%, It provides, as a result of the particular combination of its constitutional and constructional features, a capability to withstand a horizontal flame exposure of 10 seconds without hole formation according to ISO 15025/14116_Index III.

The fabric structure performs as full FR protective layer and remains its non melt performance, and shows no visible molten droplets after FR exposure or convective heat exposure.

According to an embodiment of the invention, the inventive fabric structure achieves an LOI of greater than 25, in the combination with a microporous PTFE containing membrane the LOI can be increased far more than 27 (>>27), most likely greater than 30, depending on the weight of the PFTE component.

According to an embodiment of the invention, at least one third fiber component or more additional fiber components can be used in the fiber blend in combination (e.g., antistatic fibers) in an amount of not more than 3% of the fiber blend weight. Additional fiber components may include carbon fiber, steel fiber, anti micro bacterial fibers (like silver fibers or metal ion containing fibers), PTFE fibers.

Particularly, the yarns of the fabric according to the invention do not include fibers or fiber blends comprising Aramides, PBI, or Modacryl, particularly do not include aramides, para-aramid, meta-aramid, PBI, Modacryl or blends thereof.

According to an embodiment, the flame resistant (FR) viscose fibers are man-made cellulosic fibers comprising flame resistant additives which have been incorporated in the viscose matrix during fiber production.

In a particular embodiment, the fabric according to the invention has a weight in the range of $50g/m^2$ to $550g/m^2$, preferably $90g/m^2$ - $300g/m^2$, more preferably $140g/m^2$ +/- $10g/m^2$.

According to a further embodiment of the invention, the fabric structure comprises at least one barrier layer adjacent to one side of the fabric. For example, the barrier layer comprises a porous membrane layer made of expanded polytetrafluoroethylene (ePTFE).

Preferably, the first fiber component and the second fiber component are homogenously distributed in the yarns.

Regarding the dyeing, in an embodiment of the invention, at least one surface of the fabric is dyed such that it has a color fastness of greater than 4. According to another embodiment, at least one surface of the fabric is dyed with a carrier-free dye and such that it has a color fastness of greater than 4. Preferably, the carrier-free dye is directly integrated into the fabric on at least one surface of the fabric having a color fastness of greater than 4. According to a further embodiment, the fabric is printed with a dye having a color fastness of greater than 4, particularly for camouflage applications.

Further advantageous features and aspects of the invention are evident from the dependent claims.

The invention will now be described by way of example according to embodiments with reference to the following Figures, in which:

Fig. 1     shows a schematic cross-sectional view of a yarn of a fabric structure according to an embodiment of the invention,

Fig. 2 shows a schematic top view of a part of a flame protective fabric structure according to an embodiment of the invention,

Fig. 3 shows a schematic cross-sectional view of a flame protective fabric structure which comprises a laminate of a flame protective fabric and a barrier layer according to an embodiment of the invention,

Fig. 4 shows an exemplary clothing article with comprises a flame protective fabric structure according to the invention,

Fig. 5 shows a schematic sectional view of a woven fabric structure for illustrating the fractional cover as used herein,

Fig. 6 shows a schematic view of a unit cell of plain fabric for illustrating the total fractional cover factor as used herein.

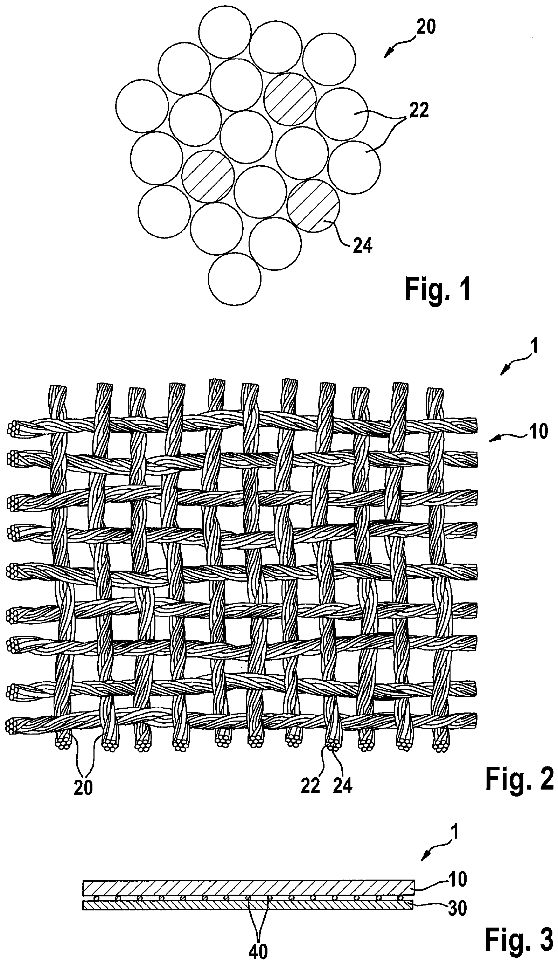

In the following, embodiments of the invention will be explained with reference to Figures 1-4, wherein Fig. 2 shows a schematic top view of a part of a woven flame protective fabric 10 in a flame protective fabric structure 1, and Fig. 1 shows a schematic cross-sectional view of a yarn 20 of the fabric 10 according to an embodiment of the invention.

The fabric 10 is formed as a woven fabric with warp and weft yarns 20 each made of a fiber blend of at least a first fiber component and a second fiber component, as shown in Fig. 1. Particularly, the first fiber component comprises flame resistant viscose fibers 22 and the second fiber component comprises meltable fibers 24. More specifically, the flame resistant viscose fibers 22 are provided in an amount of at least 50% of the fiber blend weight and the meltable fibers 24 are provided in an amount of at least 10% of the fiber blend weight. Said ratio ensures the required flame protection due to a sufficient high amount of flame resistant fibers and the required stability due to a defined range of a minimum amount of meltable fibers.

The fabric 10 is a woven textile construction, especially formed in a plain weave construction, as shown schematically in Fig. 2.

In one embodiment the fiber blend comprises the flame resistant viscose fibers 22 and the meltable fibers 24 in a weight ratio of 80:20. According to an embodiment, the meltable fibers 24 are made of polyamide (PA), preferably of polyamide 6.6. Preferably, the first fiber component, i.e. the viscose fibers 22, and the second fiber component, i.e. the meltable fibers 24, are homogenously distributed in the yarns 20.

As explained in more detail below, the fabric 10 is formed as a woven fabric or textile with a total fractional cover factor of greater than 60%. A dense and tight fabric structure is necessary for a flame resistant fabric in order to prevent the formation of holes in case of flame exposure. Especially with a woven fabric, highly dense and tight fabric structures can be provided which stabilize each other within the fabric structure.

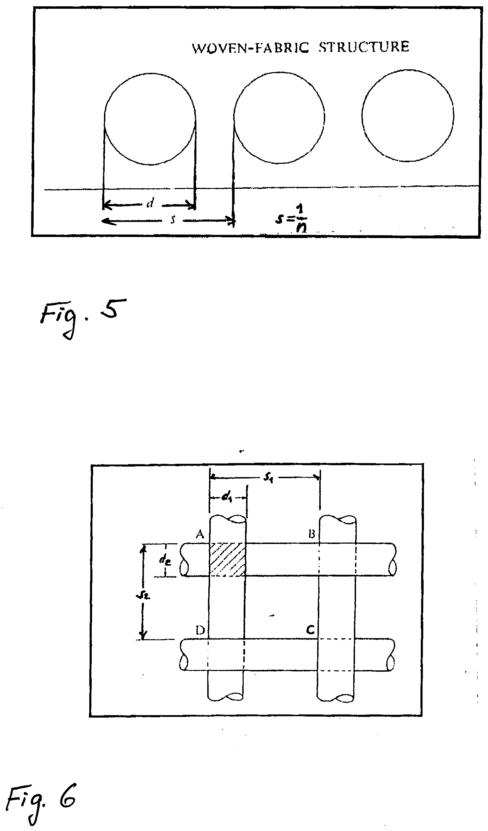

The cover factor quantifies the grade of density and tightness of the woven fabric structure with regard to ratio, yarn fineness, woven fabric and density. In general the cover factor indicates the extent to which the area of a fabric is covered by one set of threads. Fig. 6 shows a principle aspect of the total cover factor, a top view of a woven fabric with the combination of fractional cover factor warp and weft.

The inventive fabric structure provides, as a result of the particular combination of its constitutional and constructional features, a capability to withstand a horizontal flame exposure of 10 seconds without hole formation according to ISO 15025/14116_Index III.

According to an embodiment, the fabric 10 has a weight in the range of $50g/m^2$ to $550g/m^2$, preferably $140g/m^2$ $\pm10\%$.

As shown in Fig. 3, the flame protective fabric structure 1 further comprises an additional barrier layer 30 adjacent to one side of the fabric 10, for example, laminated to the fabric 10 by adhesive 40 discontinuously distributed over one surface of the fabric 10 so as to not compromise breathability of the fabric structure 1. According to an embodiment, the barrier layer 30 is formed from a membrane layer and may be waterproof and/or windproof, and it may be breathable, i.e. permeable to water vapor. In one embodiment the barrier layer 30 is formed from a porous membrane made of expanded polytetrafluoroethylene (ePTFE). With the combination of the fabric 10 with a functional barrier layer 30, particularly an ePTFE comprising membrane, the thermal protection level can be improved further. Particularly, using a microporous ePTFE barrier improves flame retardancy performance considerably.

In this context, all known types of such functional barrier layers can be used. By providing a waterproof, water vapor permeable barrier layer 30, an additional protective function can be achieved, so that, in addition to the above-mentioned protective properties, waterproof protective clothing can also be achieved that has high wearing comfort, because of the water-vapor-permeability.

Appropriate materials for a waterproof, water-vapor-permeable barrier layer are especially polyurethane, polypropylene, and polyester, including polyether ester and laminates thereof, as described in the documents US-A-4,725,418 and US-1-4,493,870. However, expanded microporous polytetrafluoroethylene (ePTFE) is particularly preferred, as described, for example, in documents US-A-3,953,566, as well as US-A-4,187,390, and expanded polytetrafluoroethylene provided with hydrophilic impregnation agents and/or hydrophilic layers; see, for example, document US-A-4,194,041. "Microporous functional layer" or "microporous barrier layer" is understood to mean a functional layer whose average pore size is between about 0.2 $\mu$m and about 0.3 $\mu$m. The pore size can be measured with a Coulter Porometer™, produced by Coulter Electronics, Inc., Hialeah, Florida, USA.

A functional or barrier layer and the respective laminates are considered "waterproof" optionally including the seams provided on the barrier layer, if it guarantees a water-entry pressure of at least $1 \times 10^4$ Pa. The barrier layer material preferably guarantees a water-entry pressure of more than $1 \times 10^5$ Pa .The water-entry pressure is then measured according to a test method in which distilled water, at 20 $\pm$ 2 °C, is applied to a sample of 100 cm$^2$ of the barrier layer with increasing pressure. The pressure increase of the water is 60 $\pm$ 3 cm H$_2$O per minute. The water-entry pressure then corresponds to the pressure at which water first appears on the other side of the sample. Details of the procedure are stipulated in ISO standard 0811 from the year 1981.

A functional or barrier layer is then considered "water-vapor-permeable" if it has a water-vapor transmission resistance Ret of less than 150 m$^2$Pa/W. Water vapor permeability may be expressed by water vapor transmission resistance (RET) The water vapor transmission resistance (RET) is a specific material property of sheet-like structures or composites which determines the latent evaporation heat flux through a given area of the sheet-like structure or composite, under a constant partial pressure gradient. The RET is measured by the Hohenstein skin model, of the Bekleidungsphysiologisches Institut (Apparel Physiology Institute] e.V. Hohenstein. The Hohenstein skin model is described in ISO 11092:1993.

For instance, the barrier layer 30 is waterproof in that it bears a water pressure of at least 8 kPa (according to ISO 811 - 1981). It may have a water vapor transmission resistance Ret < 20 m$^2$Pa/W (ISO 11092).

The barrier layer may be air impermeable according to an air permeability of < 1 l/m$^2$/s (ISO 9237-1995; 100 cm$^2$, 2,5 kPa). The barrier layer may be windproof according to an air permeability of < 50 l/m$^2$/s (ISO 9237-1995; 100 cm$^2$, 2,5 kPa). For example, the barrier layer has an air permeability of not more than 6 l/m$^2$/s (according to ISO 9237).

According to an embodiment, the fabric 10 is formed in a plain weave construction. It was found that, advantageously, a blend of 20% polyamide (PA) (particularly, PA 6.6 high tenacity) and 80% Lenzing FR fiber is a fiber blend with a good combination of advantageous properties as outlined herein, particularly for a plain weave fabric, such as having a weight of 140 g/m$^2$. In other weight categories the ratio can be adjusted but should maintain a minimum percentage of 50% viscose FR fibers.

According to an embodiment, the woven fabric comprises a total fractional cover factor of greater than 66%. Particularly, it comprises a fractional cover factor weft of greater than 33%, and/or a fractional cover factor warp of greater than 50%, preferably adding up to a total fractional cover factor of greater than 66%.

Additional blended fiber components in small quantities, e.g. for antistatic properties, can be added as long as they do not change the performance as considered in the concept.

The blend of meltable, e.g. polyamide, and viscose FR fibers can be processed in conventional staple fiber spinning processes, e.g. ring spinning, open end, and/or compact spinning. For example, the flame resistant viscose fibers and meltable fibers are made by staple fiber spinning and twisting.

The coloring process may be very flexible for the fiber blend or the fabric structure, the choice of the fiber components allows the dying of the fiber blend or the fabric structure with reactive dye stuff. As well, high quality printing is possible delivering a clear, high-contrast print with high color fastness with reactive dye stuff, which may be required for multiple uniform applications.

The inventive fabric structure itself shows a Limited Oxigen Index (LOI) of greater than 25, together with a microporous ePTFE containing membrane the level can be increased above 30.

The invention provides the advantage that all fibers in the blend may be chosen such that they are dyeable in high quality. The components of the blend are easy to process, therefore providing good repeatability. Thermosetting is possible, therefore providing a durable easycare performance, and all components together deliver high thermal stability and a very high LOI.

In the following, possible fiber components according to embodiments of the invention are described in more detail:

Flame Retardant or Resistant Viscose Fiber (in the following: FR Viscose fiber):

According to embodiments of the invention, a variety of flame resistant viscose fibers can be used. In the following, examples of various embodiments of appropriate flame resistant viscose fibers are described:

According to an embodiment of the invention, the FR Viscose fiber is a man-made cellulosic fiber which is flame retardant by incorporating "phosphorous" in the viscose matrix. The phosphorous flame retardant (or any other appropriate flame retardant) is incorporated at the fiber spinning stage. FR Viscose has been extensively used in fabric blends where it provides increased moisture absorption and comfort without compromising protection. The dyeability of the FR Viscose fiber is possible in a wide range of colors; however, color fastness to laundering is variable and similar to normal viscose fiber. FR Viscose is stable when exposed to a wide variety of acids and alkalis. FR Viscose is stable when exposed to a wide variety of bleaching agents and organic solvents. It has typically a LOI of 29.

Particularly, flame resistant viscose fibers as may be used herein are cellulosic man-made fibers containing viscose. An overview of methods used to render cellulosic textiles flame-retardant (or flame-resistant) and the mechanisms used for this is supplied by the publication: Horrocks, A. R.; Kandola, B. K. "Flame Retardant Cellulosic Textiles" Spec. Publ.-Royal Society of Chemistry, volume 224, year 1998, pages 343-362. The methods described differ in the element responsible for the flame-retardation (mainly phosphorus, however, nitrogen, boron and sulphur as well), the place of the application (surface treatment mainly with cotton, additive in fiber production with man-made fibers) and the permanency (degree of resistance of flame-retardant properties after laundering treatments).

Among the cellulosic man-made fibers, a large number of substances were suggested as flame-retardant additives for viscose fibers in fiber production.

In US 3 266 918 Tris(2,3-bromopropyl)phosphate is suggested as the flame-retardant agent. A fiber of this kind was produced for some time on an industrial scale.

A class of substances used as a flame-retardant agent is that of substituted phosphazenes. A flame-retardant viscose fiber was produced at industrial level on the basis of these substances (US 3 455 713). The flame-retardant agent is however in liquid form and can only be spun into viscose fibers with a lower yield (approx. 75 weight percent) and it tends to migrate out of the fiber thus giving the fiber an undesirable stickiness.

Apart from the above named Tris(2,3-bromopropyl)phosphate, a series of other organo-phosphates respectively phosphonic acid amides and esters were described as flame-retardant agents for viscose fibers (DE 2,451,802; DE 2,622,569; U.S. Pat. No. 4,193,805; U.S. Pat. No. 4,242,138; JP 51-136914; DE 4,128,638).

Of this class of substances, until now only the compound 2,2'-oxybis[5,5-dimethyl-1,3,2-dioxaphosphorinane] 2,2 fulfils the requirements with regard to the effectiveness (the necessary amount of incorporation in order to fulfill EN ISO 15025:2002), quantitative yield in the spinning process and not containing halogen.

As a possible FR Viskose fiber, Lenzing FR Viskose fibers may be used.

Possible meltable fibers are PA (polyamide), PP (polypropylen), and/or PE (polyethylen), which may be used herein.

Polyamide Fiber, particularly Polyamide Staple Fiber:

Most technically important polyamide (PA) types are part-crystalline thermoplastic polymers and are characterized by a high firmness, rigidity and tenacity, possess a good chemical resistance and workability. PA Fiber up to now is typically not used in FR applications as the LOI is with 22 too low for FR performance on its own and the fibers show melting and hole formation in flame tests. In blends it has been used only with cotton with additional FR post treatment (probanisation).

Possible polyamide fibers are made of polyamide (PA), such as PA 6, PA 6.4, PA 6.12, and/or PA 6.6.

Dyeability:

Dying as used herein shall be understood as relating to a process of adding color to the textile component. For example, it may comprise processes like color printing, transfer film printing and all known dye bath processes.

Examples:

In an exemplary embodiment, a fabric structure according to the invention comprises in a homogeneous distribution of fibers a fiber blend of 20% Cordura ® (PA 6.6) commercially available by the company Invista and 80% Lenzing FR® viscose fibers, commercially available by the company Lenzing made by ring spinning and twisting, the fabric formed as a woven fabric (plain weave) with a total cover factor of 66,6% and a weight of 140g/m$^2$ ±10%, which passes the horizontal flame test. The fabric can be provided with a flour carbon finish.

Example 1:

Textile Components

| Construction: | Plain weave | | | |
|---|---|---|---|---|
| Fabric content: | 80% FR viscose/ 20% Polyamid 6.6 | | | |
| Fiber 1 | FR Viscose, 40 mm (staple length) Lenzing FR Type | | | |
| Fiber 2 | Polyamid 6.6, 40 mm (staple length) Invista 420 | | | |
| Yarn blend: | Ring spin process | | | |
| Treatment: | 4 g/m$^2$ Flourcarbon | | | |

| Description | unit | standard | | Values |
|---|---|---|---|---|
| **weight** | g/m$^2$ | | | 137,9 |
| **cover factor** | % | | warp | 50% |
| | % | | weft | 35% |
| | % | | total | 66,60% |
| **face ignition test initial** | | test method ISO 15025 | | |
| afterburn | sec. | | warp/weft | 0 |
| afterglow | sec. | | warp/weft | 0 |
| Hole formation | mm | | warp/weft | 0 |
| | | according to ISO 14116 | | INDEX III |
| **face ignition test after** | | test method ISO 15025 | | |
| **washing** | | | | |
| afterburn | sec. | after 5x ISO 6330 2A,E | warp/weft | 0 |
| afterglow | sec. | | warp/weft | 0 |
| Hole formation | mm | | warp/weft | 0 |
| | | according to ISO 14116 | | INDEX III |
| **thermal stability initial** | % | according to ISO 11612 | warp | -1,2% |
| oventest | | ISO 17493@185°C, 5 min | weft | -1,1% |
| | | . | | |
| **thermal stability after washing** | % | . according to ISO 11612 | warp | -1,3% |
| oventest | | ISO 17493@185°C, 5 min ISO 6330 2A, E | weft | -1,0% |
| **dimension stability after washing** | % | DIN EN ISO 5077 | warp | 0,0% |
| after 5 times HLC 60°C | | ISO 6330 2A, E | weft | -1,0% |
| **dimension stability after dry cleaning** | % | DIN EN ISO 5077 | warp | 1,0% |
| after 5 times dry cleaning cycles | | | weft | -1,0% |
| **tensile strength** | N | DIN EN ISO 13934-1 | warp | 565 |
| | | | weft | 425 |
| **tear strength (single)** | N | DIN EN ISO 13937-2 | warp | 35 |
| | | | weft | 33 |

Example 2:

Laminate Components

| Face Fabric: | 80% FR viscose | | |
| Membrane: | 20% Polyamid 6.6 Bicomponent Membrane based on ePTFE | | |
| **Description** | **unit** | **Standard** | **Values** |
| **weight** | g/m$^2$ | ISO 3801 | | 160,2 |
| **face ignition test initial** afterburn afterglow holeformation | sec. sec. mm | test method ISO 15025 according to ISO 14116 | warp/weft warp/weft warp/weft | 0 0 0 INDEX III |
| **face ignition test after washing** afterburn afterglow holeformation | sec. sec. mm | test method ISO 15025 after 5x ISO 6330 2A,E according to ISO 14116 | warp/weft warp/weft warp/weft | 0 0 0 INDEX III |
| **thermal stability initial** oventest | % | according to ISO 11612 ISO 17493@185°C, 5 min. | warp weft | -1,3% -1,3% |
| **thermal stability after washing** oventest | % | according to ISO 11612 ISO 17493@185°C, 5 min. ISO 6330 2A, E | warp weft | -1,2% -1,0% |
| **dimension stability after washing** after 5 times HLC 60°C | % | EN ISO 5077 after 5x ISO 6330 2A, E | warp weft | -2,4% -1,9% |
| **dimension stability after dry cleaning** after 5 times dry cleaning cycles | % | EN ISO 5077 after 5x EN ISO 3175-2 | warp weft | -0,5% -0,4% |
| **tensile strength** | N | DIN EN ISO 13934-1 | warp weft | ≥ 471 ≥ 346 |
| **tear strength (single)** | N | DIN EN ISO 13937-2 | warp weft | ≥ 31 ≥ 30 |

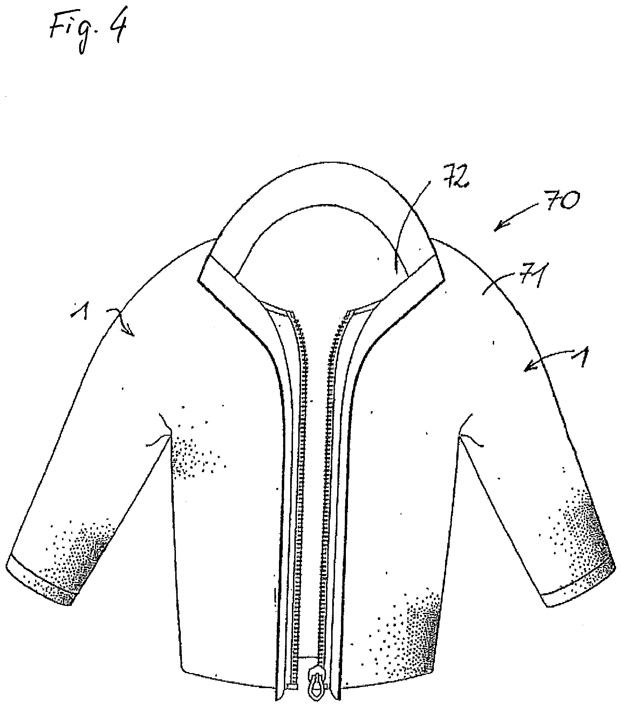

Figure 4 shows an example of a clothing article 70 in the form of an outer covering, for example, a firefighting protective jacket, constructed with a fabric structure 1 according to the invention, as explained above. In particular, the fabric 10 is arranged to form an outer material 71 of the clothing article 70 and the barrier layer 30 may be part of a two or three layer laminate attached to the inner side of the fabric 10, as shown in Fig. 3, the laminate forming an inner material 72 of the clothing 70.

Several advantages according to aspects of the invention are in particular:

- Good dye ability, color quality, and piece dye process (reactive dye),
- non melt performance, no visible melting or brittling of the meltable fiber component (determined by the oven test at a temperature of 260°C),

- good protective fabric characteristics like abrasion resistance, dimensional stability, no need for additional FR post treatment

In an embodiment of the fabric structure, in which the fabric is combined with a thermally resistant film (such as PTFE) in a laminate, a very high LOI > 27 can be obtained.

According to embodiments of the invention, the following improvements versus existing solutions can be obtained:

The inventive fabric structure shows a lower textile weight than a fabric structure made with, e.g. Modacryl/Cotton blends or Viscose Modacryl blends.

A sample of a fabric structure according to the invention having a weight of 140g/m$^2$ can pass the ISO 15025 requirement as set out above. In comparison, a Modacryl/Cotton blend requires a minimum fabric weight of 230g/m$^2$ to pass said ISO 15025 test.

Plain colors can be obtained with high color fastness as compared to Aramide fiber blends (achievable color fastness >4 for ISO105-B02 -X12).

No post FR treatment is required as compared to cotton/polyamide blends (such as IN-DURA® SOFT).

**Terms /Test methods:**

The term "flame retardant" or "flame resistant", in the context of this invention, means that the fabric structure has limited flame propagation and works as flame barrier against break open under flame exposure. European standard EN 533 (1997) establishes performance requirements for limited flame propagation of materials, based on the results of tests according to EN 532 (corresponds to EN ISO 15025 (2003) /14116).

Melting and Thermal Stability Test:

The test was used to determine the thermal stability of textile materials. This test is based on thermal stability test as described in section 8.3 of NFPA 1975, 2004 Edition. The test oven was a hot air circulating oven as specified in ISO 17493. The test was conducted according to ASTM D 751, *Standard Test Methods for Coated Fabrics,* using the Procedures for Blocking Resistance at Elevated Temperatures (Sections 89 to 93), with the following modifications:

- Borosilicate glass plates measuring 100 mm x 100 mm x 3 mm (4 in. x 4 in. x 1/8 in.) were used.

- A test temperature of 265°C, +3/-0°C (510°F, +5/-0°F) was used.

The specimens were allowed to cool a minimum of 1 hour after removal of the glass plates from the oven.

Any sample side sticking to glass plate, sticking to itself when unfolded, or showing evidence of melting or dripping was considered as meltable. Any sample side lacking evidence of meltable side was considered as thermally stable.

For the purpose of this invention, a textile made of meltable fibers according to an embodiment of the invention has been manufactured and tested based on the test description above.

Horizontal Flame exposure test:

Measurement of flame retardant was carried out in accordance with International Standard ISO 15025 (2003) for 10 sec flame to surface. Outer textile face of the sample was exposed to the flame for 10 sec. After flame time was recorded. Samples with an after flame time of greater than 10 sec were considered as flammable. Samples with an after flame of 2 sec or less were considered as non-flammable. Preferred samples have an after glow of 2 sec or less. Most preferred samples have no after flame, no after glow and no hole formation.

The performance is expressed by an index of limited flame propagation defined in ISO 14116. Three performance stages are established:

- In index-I materials, no flame propagation occurs, hole formation can occur during flame contact.

- In index-II materials, no flame propagation occurs, hole formation does not occur on flame contact.

- In index-III materials, no flame propagation occurs, hole formation does not occur on flame contact, only limited afterburning occurs.

Clothing with Index III fulfills the requirements of protective clothing for fire fighters and other Heat &Flame protective clothing.

Regarding woven fabric calculation, and in particular regarding cover factor, the following definitions are given:

**Cover Factor:**

The cover factor indicates the extent to which the area of a fabric is covered by one set of threads.

For any fabric there are two cover factors: the warp cover factor and the weft cover factor. The cloth cover factor is obtained by adding the weft cover factor to the warp cover.

Calculation: The cover factor in SI units is calculated as: Cover Factor (SI):

$$(\text{threads/cm})/10 \times \sqrt{\text{tex}}$$

The term "tex" is a standard unit of measure for the linear mass density of fibers and is defined as the mass in grams per 1000 meters.

Example:

$$\text{Tex} = 20: \text{threads/cm} = 28$$

$$\text{Cover factor (SI)} = (28 \times \sqrt{20})/10 = 12.5$$

$$\text{Cover Factor (Pierce)} = n/\sqrt{N}$$

where n= threads/inch and N is cotton count

Fractional Cover factor:

In fabrics constructed from yarns, cover may be considered as the fraction of the total fabric area that is "covered" by the component yarns. An over-simplification of the idea for woven fabric is shown in Figure 5.

The yarn has a circular cross-section of diameter, d, and adjacent yarns are displaced by a distance s. The fractional cover is then d/s.

In the ideal model, s will be equal to 1/n, where n is the number of threads per unit length. The fractional cover could be expressed in terms of d and n.

$$\text{Fractional cover factor} = d \times n$$

Fractional cover factor:

$$C_1 = 4.44 \sqrt{(\text{tex/fiber density})} \times \text{threads/cm} \times 10^{-3}$$

Total Cover factor:

The total area covered by the fabric (Plain weave) is ABCD. The shaded area in Fig. 6 is the part of the total area covered by both yarns, and, because of this, it would not be strictly accurate merely to add the warp and weft cover values together and quote them as the total cover factor.

The shaded areas in Fig. 6 are each $d_1 \times d_2$ and the total area of the cell is $s_1 \times s_2$. By definition, fractional cover factor, $C = d/s$. Hence

$$d_1 = C_1 s_1$$

$$d_2 = C_2 s_2$$

$$d_1 \, d_2 = C_1 s_1 \, C_2 s_2$$

Expressed as a fraction of total area $s_1 \times s_2$, the shaded area becomes:

$$d_1 \, d_2 = C_1 s_1 \, C_2 s_2 \, / \, s_1 \times s_2 = C_1 \, C_2$$

The term $C_1 \, C_2$ must be deducted from the sum of $C_1$ and $C_2$, hence

$$\text{Total fractional cover factor} = C_1 + C_2 - C_1 \, C_2$$

The fabric according to example 1 shows the following total fractional cover factor:

| Cover Factor (%) | |
|---|---|
| Fractional Cover factor warp C1 | 50 |
| Fractional Cover factor weft C2 | 35 |
| Total Fractional Cover factor: C(tot)= (C1+C2 )-(ClxC2) | 66,6 |

**Claims**

1. A flame protective fabric structure (1) comprising:

    - a fabric (10) being formed with multiple yarns (20), wherein each of the yarns (20) is made of a fiber blend of at least a first fiber component and a second fiber component, **characterized by**
    - the first fiber component comprising flame resistant viscose fibers (22) in an amount of at least 50% of the fiber blend weight and the second fiber component comprising meltable fibers (24) in an amount of at least 10% of the fiber blend weight, wherein the yarns do not include aramide fibers; and
    - the fabric (10) being formed as a woven fabric with a total fractional cover factor of greater than 60% having a capability to withstand a horizontal flame exposure of 10 seconds without hole formation according to ISO 15025/14116_Index III.

2. The flame protective fabric structure (1) according to claim 1, wherein the meltable fibers (24) are made of polyamide, preferably of polyamide 6.6.

3. The flame protective fabric structure (1) according to claim 1 or 2, wherein the flame resistant viscose fibers (22) are man-made cellulosic fibers comprising flame resistant additives which have been incorporated in the viscose matrix during fiber production.

4. The flame protective fabric structure (1) according to one of claims 1 to 3, wherein the fiber blend comprises the flame resistant viscose fibers (22) and the meltable fibers (24) in a weight ratio of 80:20.

5. The flame protective fabric structure (1) according to one of claims 1 to 4, wherein the fabric (10) has a weight in the range of 50g/m$^2$ to 550g/m$^2$, preferably 90g/m$^2$ to 300g/m$^2$, more preferably 140g/m$^2$ $\pm$10%.

**6.** The flame protective fabric structure (1) according to one of claims 1 to 5, wherein the fabric (10) is formed in a plain weave construction.

**7.** The flame protective fabric structure (1) according to one of claims 1 to 6, further comprising at least one barrier layer (30) adjacent to one side of the fabric (10).

**8.** The flame protective fabric structure (1) according to claim 7, wherein the barrier layer comprises a porous membrane layer made of expanded polytetrafluoroethylene.

**9.** The flame protective fabric structure (1) according to one of claims 1 to 8, wherein the first fiber component and the second fiber component are homogenously distributed in the yarns (20).

**10.** The flame protective fabric structure (1) according to one of claims 1 to 9, wherein the fiber blend comprises at least one third or more additional fiber components, the third and more additional fiber components being provided in the fiber blend in an amount of not more than 3% of the fiber blend weight.

**11.** The flame protective fabric structure (1) according to one of claims 1 to 10, wherein at least one surface of the fabric is dyed such that it has a color fastness of greater than 4.

**12.** The flame protective fabric structure (1) according to one of claims 1 to 10, wherein at least one surface of the fabric is dyed with a carrier-free dye and such that it has a color fastness of greater than 4.

**13.** The flame protective fabric structure (1) according to claim 12, wherein the carrier-free dye is directly integrated into the fabric on at least one surface of the fabric having a color fastness of greater than 4.

**14.** The flame protective fabric structure (1) according to one of claims 1 to 13, wherein the fabric is printed with a dye having a color fastness of greater than 4, particularly for camouflage applications.

**15.** The flame protective fabric structure (1) according to one of claims 1 to 14, wherein the flame resistant viscose fibers and meltable fibers are made by staple fiber spinning and twisting.

**16.** A clothing article comprising a flame protective fabric structure (1) according to one of the preceding claims.


**Patentansprüche**

**1.** Flammschützende Gewebestruktur (1) mit:

- einem Gewebe (10), das mit mehreren Fäden (20) gebildet ist, wobei jeder der Fäden (20) aus einer Fasermischung aus mindestens einer ersten Faserkomponente und einer zweiten Faserkomponente gebildet ist, **dadurch gekennzeichnet, dass**
- die erste Faserkomponente flammbeständige Viskosefasern (22) in einer Menge von mindestens 50% des Fasermischungsgewichts aufweist und die zweite Faserkomponente schmelzbare Fasern (24) in einer Menge von mindestens 10% des Fasermischungsgewichts aufweist, wobei die Fäden keine Aramidfasern aufweisen; und
- das Gewebe (10) als ein Webgewebe gebildet ist, bei dem ein Gesamtanteildeckfaktor von mehr als 60% eine Fähigkeit besitzt, einer horizontalen Aussetzung von Flammen 10 Sekunden ohne Bildung von Löchern gemäß ISO 15025/14116_Index III standzuhalten.

**2.** Flammschützende Gewebestruktur (1) nach Anspruch 1, wobei die schmelzbaren Fasern (24) aus Polyamid, vorzugsweise aus Polyamid 6.6, hergestellt sind.

**3.** Flammschützende Gewebestruktur (1) nach Anspruch 1 oder 2, wobei die flammbeständigen Viskosefasern (22) künstlich hergestellte Zellulosefasern sind, die flammbeständige Zusatzstoffe aufweisen, die bei der Faserherstellung in die Viskosematrix eingearbeitet wurden.

**4.** Flammschützende Gewebestruktur (1) nach einem der Ansprüche 1 bis 3, wobei die Fasermischung die flammbeständigen Viskosefasern (22) und die schmelzbaren Fasern (24) in einem Gewichtsverhältnis von 80:20 aufweist.

**5.** Flammschützende Gewebestruktur (1) nach einem der Ansprüche 1 bis 4, wobei das Gewebe (10) ein Gewicht im Bereich von 50g/m$^2$ bis 550g/m$^2$, vorzugsweise 90g/m$^2$ bis 300g/m$^2$, noch besser 140g/m$^2$ $\pm$ 10%, hat.

**6.** Flammschützende Gewebestruktur (1) nach einem der Ansprüche 1 bis 5, wobei das Gewebe (10) in einer Leinwandbindungsausführung gebildet ist.

**7.** Flammschützende Gewebestruktur (1) nach einem der Ansprüche 1 bis 6, ferner aufweisend mindestens eine Barriereschicht (30), die einer Seite des Gewebes (10) benachbart angeordnet ist.

**8.** Flammschützende Gewebestruktur (1) nach Anspruch 7, wobei die Barriereschicht eine poröse Membranschicht aus expandiertem Polytetrafluorethylen aufweist.

**9.** Flammschützende Gewebestruktur (1) nach einem der Ansprüche 1 bis 8, wobei die erste Faserkomponente und die zweite Faserkomponente homogen in den Fäden (20) verteilt sind.

**10.** Flammschützende Gewebestruktur (1) nach einem der Ansprüche 1 bis 9, wobei die Fasermischung mindestens ein Drittel oder mehr zusätzliche Faserkomponenten aufweist, wobei das Drittel und mehr zusätzliche Faserkomponenten in der Fasermischung in einer Menge von nicht mehr als 3% des Fasermischungsgewichts vorhanden sind.

**11.** Flammschützende Gewebestruktur (1) nach einem der Ansprüche 1 bis 10, wobei mindestens eine Oberfläche des Gewebes derart gefärbt ist, dass sie eine Farbechtheit von über 4 hat.

**12.** Flammschützende Gewebestruktur (1) nach einem der Ansprüche 1 bis 10, wobei mindestens eine Oberfläche des Gewebes mit einer trägerstofffreien Farbe und derart gefärbt ist, dass sie eine Farbechtheit von über 4 hat.

**13.** Flammschützende Gewebestruktur (1) nach Anspruch 12, wobei die trägerstofffreie Farbe auf mindestens einer Oberfläche des Gewebes mit einer Farbechtheit von über 4 direkt in das Gewebe integriert ist.

**14.** Flammschützende Gewebestruktur (1) nach einem der Ansprüche 1 bis 13, wobei das Gewebe mit einer Farbe mit einer Farbechtheit von über 4, insbesondere für Tarnungsanwendungen, bedruckt ist.

**15.** Flammschützende Gewebestruktur (1) nach einem der Ansprüche 1 bis 14, wobei die flammbeständigen Viskosefasern und schmelzbaren Fasern durch Stapelfaserspinnen und -zwirnen hergestellt sind.

**16.** Kleidungsartikel mit einer flammschützenden Gewebestruktur (1) nach einem der vorhergehenden Ansprüche.


**Revendications**

**1.** Structure de tissu (1) qui procure une protection contre les flammes, comprenant :

- un tissu (10) réalisé avec plusieurs fils (20), chacun des fils (20) étant constitué d'un mélange fibreux d'au moins un premier composant fibreux et un deuxième composant fibreux, **caractérisée par le fait que** :
- le premier composant fibreux comprend des fibres de viscose (22) résistant aux flammes en une quantité d'au moins 50 % du poids du mélange fibreux et le deuxième composant fibreux comprend des fibres fusibles (24) en une quantité d'au moins 10 % du poids du mélange fibreux, les fils ne comprenant pas des fibres d'aramide ; et
- le tissu (10) est réalisé sous la forme d'une étoffe tissée avec un facteur de couverture fractionnaire total supérieur à 60 % possédant une capacité de résistance à une exposition à des flammes en position horizontale de 10 secondes en l'absence de formation de trous conformément à la norme ISO 15025/14116_Index III.

**2.** Structure de tissu (1) qui procure une protection contre les flammes selon la revendication 1, dans laquelle les fibres fusibles (24) sont constituées de polyamide, de préférence de polyamide 6.6.

**3.** Structure de tissu (1) qui procure une protection contre les flammes selon la revendication 1 ou 2, dans laquelle les fibres de viscose (22) résistant aux flammes représentent des fibres cellulosiques synthétiques comprenant des additifs résistant aux flammes qui ont été incorporés dans la matrice de viscose au cours de la production des fibres.

**4.** Structure de tissu (1) qui procure une protection contre les flammes selon l'une quelconque des revendications 1 à 3, dans laquelle le mélange fibreux comprend les fibres de viscose (22) résistant aux flammes et les fibres fusibles (24) dans un rapport pondéral de 80 : 20.

5. Structure de tissu (1) qui procure une protection contre les flammes selon l'une quelconque des revendications 1 à 4, dans laquelle le tissu (10) possède un poids dans la plage de 50 g/m$^2$ à 550 g/m$^2$, de préférence de 90 g/m$^2$ à 300 g/m$^2$, de manière plus préférée de 140 g/m$^2$ $\pm$ 10 %.

6. Structure de tissu (1) qui procure une protection contre les flammes selon l'une quelconque des revendications 1 à 5, dans laquelle le tissu (10) est réalisé dans une structure à armure toile.

7. Structure de tissu (1) qui procure une protection contre les flammes selon l'une quelconque des revendications 1 à 6, comprenant en outre au moins une couche d'arrêt (30) en position adjacente à un côté du tissu (10).

8. Structure de tissu (1) qui procure une protection contre les flammes selon la revendication 7, dans laquelle la couche d'arrêt comprend une couche sous la forme d'une membrane poreuse constituée de polytétrafluoréthylène expansé.

9. Structure de tissu (1) qui procure une protection contre les flammes selon l'une quelconque des revendications 1 à 8, dans laquelle le premier composant fibreux et le deuxième composant fibreux sont distribués de manière homogène dans les fils (20).

10. Structure de tissu (1) qui procure une protection contre les flammes selon l'une quelconque des revendications 1 à 9, dans laquelle le mélange fibreux comprend au moins un troisième composant fibreux supplémentaire ou plus, le troisième composant fibreux supplémentaire et plus étant procuré dans le mélange fibreux en une quantité qui n'est pas supérieure à 3 % du poids du mélange fibreux.

11. Structure de tissu (1) qui procure une protection contre les flammes selon l'une quelconque des revendications 1 à 10, dans laquelle au moins une surface du tissu est colorée d'une manière telle qu'elle possède une solidité de couleur supérieure à 4.

12. Structure de tissu (1) qui procure une protection contre les flammes selon l'une quelconque des revendications 1 à 10, dans laquelle au moins une surface du tissu est colorée avec un colorant exempt de véhiculeur et d'une manière telle qu'elle possède une solidité de couleur supérieure à 4.

13. Structure de tissu (1) qui procure une protection contre les flammes selon la revendication 12, dans laquelle le colorant exempt de véhiculeur est intégré directement dans le tissu sur au moins une surface du tissu possédant une solidité de couleur supérieure à 4.

14. Structure de tissu (1) qui procure une protection contre les flammes selon l'une quelconque des revendications 1 à 13, dans laquelle le tissu est imprimé avec un colorant possédant une solidité de couleur supérieure à 4, en particulier pour des applications de camouflage.

15. Structure de tissu (1) qui procure une protection contre les flammes selon l'une quelconque des revendications 1 à 14, dans laquelle les fibres de viscose résistant aux flammes et les fibres fusibles sont réalisées par filature et retordage de fibres discontinues.

16. Article vestimentaire comprenant une structure de tissu (1) qui procure une protection contre les flammes selon l'une quelconque des revendications précédentes.

Fig. 1

Fig. 2

Fig. 3

Fig. 4

WOVEN-FABRIC STRUCTURE

$$s = \frac{1}{n}$$

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009012266 A
- US 20120270456 A1
- US 20050025962 A1
- US 4725418 A
- US 14493870 B
- US 3953566 A
- US 4187390 A
- US 4194041 A
- US 3266918 A
- US 3455713 A
- DE 2451802
- DE 2622569
- US 4193805 A
- US 4242138 A
- JP 51136914 A
- DE 4128638

### Non-patent literature cited in the description

- **HORROCKS, A. R. ; KANDOLA, B. K.** Flame Retardant Cellulosic Textiles. *Spec. Publ.-Royal Society of Chemistry,* 1998, vol. 224, 343-362